(19) Europäisches Patentamt
European Patent Office
Office européen des brevets

(11) EP 4 772 433 A1

(12) EUROPEAN PATENT APPLICATION
published in accordance with Art. 153(4) EPC

(43) Date of publication:
08.07.2026 Bulletin 2026/28

(51) International Patent Classification (IPC):
B63J 3/02 (2006.01)        H02J 3/12 (2026.01)
H02J 3/38 (2026.01)        H02J 3/24 (2006.01)
B63J 3/00 (2006.01)

(21) Application number: 24860170.0

(22) Date of filing: 15.07.2024

(52) Cooperative Patent Classification (CPC):
B63J 3/00; B63J 3/02; H02J 3/0014; H02J 3/12;
H02J 3/38

(86) International application number:
PCT/KR2024/010101

(87) International publication number:
WO 2025/048249 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.08.2023  KR 20230113713
03.01.2024  KR 20240001075

(71) Applicants:
• POSTECH Research and Business Development
Foundation
Pohang-si, Gyeongsangbuk-do 37673 (KR)

• HD Hyundai Heavy Industries Co., Ltd.
Dong-gu
Ulsan 44032 (KR)

(72) Inventors:
• KIM, Young Jin
Pohang-is, Gyeongsangbuk-do 37673 (KR)
• NAM, Seung Wan
Pohang-is, Gyeongsangbuk-do 37673 (KR)

(74) Representative: Stöckeler, Ferdinand
Schoppe, Zimmermann, Stöckeler
Zinkler, Schenk & Partner mbB
Patentanwälte
Radlkoferstrasse 2
81373 München (DE)

(54) METHOD AND APPARATUS FOR SHIP POWER MANAGEMENT BASED ON GRID-FORMING SHAFT GENERATOR, AND SHIP USING SAME

(57) Disclosed are a ship power management method and apparatus for stably connecting a shaft generator to a ship power system and stably inputting power thereof, and a ship using the same. The ship power management method comprises: connecting a shaft generator to a ship power system; controlling, with a zero-power reference, a generator-side converter of a power converter connected to the shaft generator; charging a DC link capacitor of the power converter; magnetizing the shaft generator by using current of the DC link capacitor so as to enable self-power generation; controlling a grid-side converter of the power converter with the zero-power reference; controlling the generator-side converter to charge the DC link capacitor with power of the shaft generator; and performing secondary voltage control in the power converter so that the shaft generator operates as a distributed power generator of the ship power system.

FIG. 1

**Description**

[Technical Field]

The present invention relates to a shipboard microgrid management technology based on a grid-forming shaft generator, and more particularly, to a ship power management method and apparatus for stably inputting power of a grid-forming shaft generator to a shipboard microgrid and stably connecting the shaft generator to the shipboard microgrid, and a ship using the same.

[Background Art]

In order to reduce carbon emissions of ships, there is an increasing demand for ship propulsion and power production using alternative energy resources. Alternative energy resources such as batteries, fuel cells, and solar power generation are receiving attention, and shaft generators, in which a generator is installed on a propeller shaft of the conventional power device, have also recently been applied to many ships as alternative energy sources.

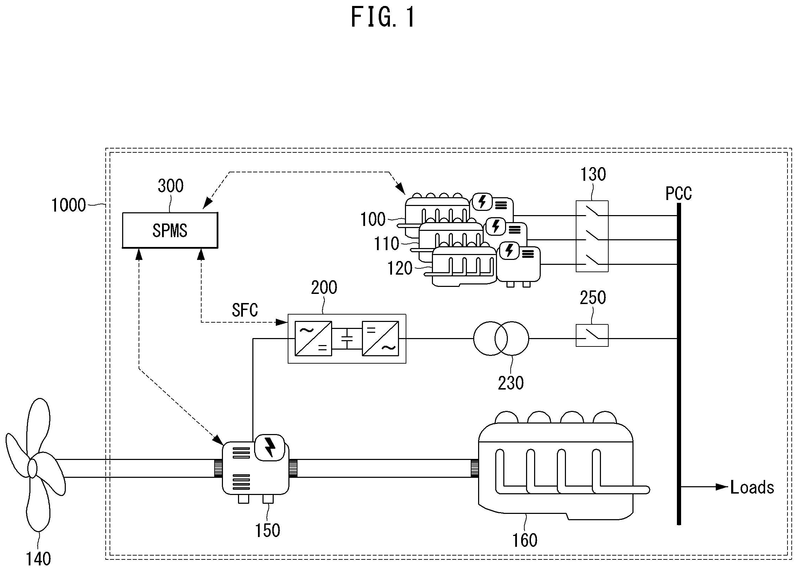

A ship power management system is configured to control the operations of a plurality of synchronous generators and a power converter connected to a shaft generator on a propeller shaft of a ship (see FIG. 1). Control systems of shipboard microgrids have been standardized for decades based on synchronous generators, and due to the characteristics of the industry, rather than changing the structure of a verified overall control system, it is preferred that power converters for alternative energy resources emulate the conventional synchronous generators. Therefore, power converters for alternative energy should emulate the characteristics of the control methods of the conventional synchronous generators, that is, voltage droop and frequency droop characteristics.

Meanwhile, in most power converters of alternative energy resources, a voltage is dropped by impedance in a circuit due to impedance caused by a grid-forming voltage control loop of a power converter and an isolation transformer applied to an output terminal to block common mode noise. However, it is impossible to emulate the same voltage droop characteristics as a synchronous generator according to a load current, and currently, secondary voltage controllers capable of compensating for this issue are not present in ship power control systems.

Therefore, when alternative energy resources such as grid-forming shaft generators are used in shipboard microgrids, reactive power feeding issues during a parallel operation and voltage drop issues during a standalone operation occur, and thus there is a need for an appropriate solution for addressing these issues.

[Detailed Description of Invention]

[Technical Problem]

The present invention has been derived to satisfy the requirements of the related art and is directed to providing a ship power management method and apparatus in which virtual impedance is applied to voltage control of a power converter connected to a grid-forming shaft generator to allow the power converter to have sufficient inertia against disturbances, and power generated by the shaft generator may be effectively supplied to a shipboard microgrid.

The present invention is also directed to providing a ship power management method and apparatus which is capable of effectively compensating for a voltage drop in a shaft generator system in a power converter connected to a shaft generator of a shipboard microgrid using a novel self-secondary voltage control algorithm.

The present invention is also to providing a ship power management method and apparatus which is capable of performing self-secondary voltage control using a power converter connected to a shaft generator according to a parallel operation or a standalone operation mode of the shaft generator even in a ship power management system in which a separate secondary voltage controller is not present.

The present invention is also directed to providing a ship using the ship power management method or ship power management apparatus described above.

[Technical Solution]

According to an aspect of the present invention for solving the above-described technical problem, a ship power management apparatus based on a grid-forming shaft generator, which is a ship power management apparatus for a shipboard microgrid based on a grid-forming shaft generator, includes at least one command including a shaft generator grid connection sequence, and a processor which is connected to a memory configured to store the at least one command and executes the at least one command. The processor, by the at least one command, performs electrically connecting a shaft generator to a shipboard microgrid, controlling a generator-side converter of a power converter connected to the shaft generator based on a zero power reference, charging a DC-link capacitor of the power converter, magnetizing the shaft generator using a current of the DC-link capacitor, causing the shaft generator to perform self-generation, controlling a grid-side converter of the power converter based on a zero power reference, controlling the generator-side converter of the power converter to charge the DC-link capacitor with power of the shaft generator, and performing self-secondary voltage control through the power converter such that the shaft generator operates as a distributed generator of the shipboard microgrid.

According to another aspect of the present invention for solving the above-described technical problem, a ship power management method based on a grid-forming shaft generator includes electrically connecting a shaft generator to a shipboard microgrid, controlling a generator-side converter of a power converter connected to the shaft generator based on a zero power reference, charging a DC-link capacitor of the power converter, magnetizing the shaft generator using a current of the DC-link capacitor, causing the shaft generator to perform self-generation, controlling a grid-side converter of the power converter based on a zero power reference, controlling the generator-side converter of the power converter to charge the DC-link capacitor with power of the shaft generator, and performing self-secondary voltage control through the power converter such that the shaft generator operates as a distributed generator of the shipboard microgrid.

The charging of the DC-link capacitor of the power converter connected to the shaft generator may include controlling the grid-side converter to charge the DC-link capacitor to reach at least a portion of a rated voltage thereof. A charged DC voltage may be maintained by control of the power converter.

The ship power management method (hereinafter also referred to simply as "method") may further include, before the magnetizing of the shaft generator, controlling the grid-side converter in a grid-feeding mode.

The method may further include, when the DC-link capacitor is charged to a rated voltage or a preset voltage with the power of the shaft generator, switching the grid-side converter from the grid-feeding mode to a grid-forming mode.

The performing of the self-secondary voltage control may include performing voltage control of the grid-side converter according to a control droop coefficient determined based on or selected from measurement values that are preset or collected in real time.

The performing of the self-secondary voltage control may further include subtracting each of a feedback output voltage reference and preset fixed virtual impedance from an output voltage reference and transmitting a subtracted result to a voltage controller.

The virtual impedance may be obtained by adding virtual inductance and virtual resistance.

The method may further include performing at least one of torque control and flux control on the shaft generator to maintain a voltage of the DC-link capacitor.

The method may further include performing at least one of torque control and flux control on the shaft generator to connect the power converter to a point of common coupling of the shipboard microgrid.

The method may further include adaptively estimating stator resistance for the shaft generator using a semi-positive definitive Lyapunov function defined to include a stator resistance error for the torque control or the flux control on the shaft generator.

The estimating may further include performing integral control using a low-pass filter to achieve fast convergence of an equation solution when an equation is solved using a derivative of the semi-positive definitive Lyapunov function.

According to still another aspect of the present invention for solving the above-described technical problem, a ship using a ship power management method for a ship power management system based on a grid-forming shaft generator include a ship power management apparatus including a memory configured to store at least one command for implementing a shaft generator grid connection sequence, and a processor connected to the memory and configured to execute the at least one command, and a hull on which the ship power management apparatus is mounted. Here, the processor, by the at least one command, performs electrically connecting a shaft generator to a shipboard microgrid, controlling a generator-side converter of a power converter connected to the shaft generator based on a zero power reference, charging a DC-link capacitor of the power converter, magnetizing the shaft generator using a current of the DC-link capacitor, causing the shaft generator to perform self-generation, controlling a grid-side converter of the power converter based on a zero power reference, controlling the generator-side converter of the power converter to charge the DC-link capacitor with power of the shaft generator, and performing self-secondary voltage control through the power converter such that the shaft generator operates as a distributed generator of the shipboard microgrid.

In the charging of the DC-link capacitor of the power converter connected to the shaft generator, the processor may control the grid-side converter to charge the DC-link capacitor to reach at least a portion of a rated voltage thereof and may maintain a charged DC-link voltage through control of the power converter.

In the ship, the processor may further perform, before the magnetizing of the shaft generator, controlling the grid-side converter in a grid-feeding mode.

In the ship, the processor may further perform, when the DC-link capacitor is charged to a rated voltage or a preset voltage with the power of the shaft generator, switching the grid-side converter from the grid-feeding mode to a grid-forming mode.

In the ship, in the performing of the self-secondary voltage control, the processor may perform voltage control of the grid-side converter according to a control droop coefficient determined based on or selected from measurement values that are preset or collected in real time.

In the ship, in the performing of the self-secondary voltage control, the processor may further perform subtracting each of a feedback output voltage reference and preset fixed virtual impedance from an output voltage reference and transmitting a subtracted result to a voltage controller.

In the ship, the processor may further perform at least one of torque control and flux control on the shaft generator to maintain a voltage of the DC-link capacitor.

In the ship, the processor may further perform adaptively estimating stator resistance for the shaft generator using a semi-positive definitive Lyapunov function defined to include a stator resistance error for torque control or flux control on the shaft generator.

According to yet another aspect of the present invention for solving the above-described technical problem, a ship including a hull on which the ship power management apparatus is mounted may be provided.

[Advantageous Effects]

According to the present invention, there can be provided an efficient grid connection method of a grid-forming shaft generator applied to a ship, and a self-secondary voltage control method for improving the power quality of a shipboard microgrid. In particular, a virtual impedance-based grid-forming control mode can be provided to secure stability during switching between a grid-feeding control mode and a grid-forming control mode of a power converter connected to a shaft generator, and thus power of a shaft generator based on a squirrel-cage induction device can be efficiently supplied to a power grid.

In addition, according to the present invention, when the voltage droop characteristics and/or frequency droop characteristics of a synchronous generator are emulated in a shaft generator, a power converter performs self-secondary voltage control in accordance with a preset voltage standard for each of a parallel operation and a standalone operation to compensate for a voltage drop occurring in a grid-forming power converter and connection equipment such as an isolation transformer, thereby enabling the shaft generator to effectively perform a grid-forming operation in a shipboard microgrid.

[Description of Drawings]

FIG. 1 is a schematic diagram of a shipboard microgrid to which a ship power management method based on a grid-forming shaft generator according to one embodiment of the present invention may be applied.

FIG. 2 is a graph for describing the voltage droop characteristics of a ship power management system that may be adopted in the shipboard microgrid of FIG. 1.

FIG. 3 is a graph for describing the frequency droop characteristics of a ship power management system that may be adopted in the shipboard microgrid of FIG. 1.

FIG. 4 is a schematic block diagram of a ship power management apparatus that may be adopted in the shipboard microgrid of FIG. 1.

FIG. 5 is a block diagram for describing a control process of a squirrel-cage induction generator that may be adopted in the ship power management apparatus of FIG. 4.

FIG. 6 is a flowchart of squirrel-cage induction generator (SCIG) control phases that may be performed by the ship power management apparatus of FIG. 5.

FIG. 7 is a block diagram for describing a first operation mode (Phase I) among the SCIG control phases of FIG. 6.

FIG. 8 is a block diagram for describing a second operation mode (Phase II) among the SCIG control phases of FIG. 6.

FIG. 9 is a block diagram for describing a third operating mode (Phase III) among the SCIG control phases of FIG. 6.

FIG. 10 is a block diagram for describing an adaptive flux control process that may be applied to the SCIG control phases of FIG. 6.

FIG. 11 is a block diagram for describing a virtual impedance-based voltage control process of a grid-forming power converter that may be adopted in the ship power management apparatus of FIG. 4.

FIG. 12 is an exemplary diagram for describing a self-secondary voltage control structure that may be adopted in a shipboard microgrid management method according to another embodiment of the present invention.

FIGS. 13A to 13C are graphs showing root loci according to modifications of specific parameters for a stability verification model of a shipboard microgrid management method of the present embodiment.

FIG. 14 is a diagram of a simulation control configuration that may be adopted in a shipboard microgrid management method of the present embodiment.

FIGS. 15A and 15B are graphs showing simulation results for active power and reactive power during control mode switching between grid-feeding and grid-forming according to the simulation control configuration of FIG. 14.

FIGS. 16A and 16B are graphs showing simulation results for active power and reactive power during control mode switching between grid-feeding and grid-forming by applying a shipboard microgrid management method of the present embodiment to an actual ship.

FIGS. 17A and 17B are graphs showing a power factor, active power, and reactive power during a parallel operation of a grid-forming power converter and a synchronous generator, before and after self-secondary voltage control is applied in a shipboard microgrid management method of the present embodiment.

FIGS. 18A and 18B are graphs showing a reference voltage and an output voltage when a grid-forming power converter operates in parallel with a synchronous generator, before and after self-secondary voltage control is applied in a shipboard microgrid management method of the present embodiment.

FIGS. 19A and 19B are graphs showing a power factor, active power, and reactive power during a standalone operation of a grid-forming power converter in a shipboard microgrid management method of the present embodiment.

FIGS. 20A and 20B are graphs showing a reference voltage and an output voltage during a standalone operation of a grid-forming power converter in a shipboard microgrid management method of the present embodiment.

[Modes of the Invention]

The present invention may be modified in various forms, and specific embodiments thereof will be described and illustrated in the accompanying drawings. However, it should be understood that this is not intended to limit the disclosure to specific embodiments, and includes all transformations, equivalents, and substitutes included in the spirit and scope of the disclosure.

The terms "first," "second," and the like may be simply used for description of various constituent elements, but those constituent elements are not limited by the terms. The above terms are used only for distinguishing one constituent element from other constituent elements. For example, a first constituent element may be referred to as a second constituent element and similarly, the second constituent element may be referred to as the first constituent element without departing from the scope of the present disclosure. The term "and/or" includes a combination of a plurality of related listed items or any one item of the plurality of related listed items.

In embodiments of the present application, "at least one of A and B" may refer to "at least one of A or B" or "at least one of one or more combinations of A and B." In addition, in the embodiments of the present application, "one or more of A and B" may refer to "one or more of A or B" or "one or more of one or more combinations of A and B."

When a certain component is mentioned as being "connected" or "linked" to another component, it should be understood that the certain component may be directly connected or linked to another component, but still another component may be present therebetween. On the other hand, when it is mentioned that a certain component is "directly connected" or "directly linked" to another element, it should be understood that there is no other certain component therebetween.

The terms used herein are merely used to describe specific embodiments and are not intended to limit the disclosure. An expression used in the singular encompasses the expression of the plural, unless it has a clearly different meaning in the context. In the present application, the word "comprise" or "have" is used to specify existence of a feature, a numbers, a process, an operation, a constituent element, a part, or a combination thereof, and it will be understood that existence or additional possibility of one or more other features or numbers, processes, operations, constituent elements, parts, or combinations thereof are not excluded in advance.

Unless defined otherwise, all the terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in detail with reference to the accompanying drawings. In describing the present invention, the same reference numerals are used for the same components in the drawings to facilitate overall understanding, and redundant descriptions of the same components will be omitted.

FIG. 1 is a schematic diagram of a shipboard microgrid to which a power management method of a shipboard microgrid including a grid-forming shaft generator according to one embodiment of the present invention (hereinafter briefly referred to as a "ship power management method") may be applied.

Referring to FIG. 1, a shipboard microgrid mounted on a ship 1000 may include synchronous generators 100, 110, and 120, a switchboard 130, a shaft generator (SG) 150, a power converter 200, an isolation transformer 230, and a circuit breaker 250.

The synchronous generators 100, 110, and 120 may be products from the same manufacturer in consideration of maintenance. All of three synchronous generators 100, 110, and 120 may be simultaneously used as distributed power sources, or only one or two thereof may be used as a distributed power source.

In addition, the synchronous generators 100, 110, and 120 constitute main power generation devices in a shipboard microgrid, and although sizes thereof are different, the synchronous generators 100, 110, and 120 may be provided by the same manufacturer and may use the same governor and automatic voltage regulator (AVR). Therefore, reactive power sharing between synchronous generators may be sufficiently achieved by primary voltage control performed by an AVR. In governor frequency control, secondary frequency control (SFC) is generally applied because combustion characteristics may vary even among identical engines. Droop curves for frequency and voltage of all synchronous generators in a shipboard microgrid may be designed in doops of 3% and 2.5%.

The switchboard 130 may include circuit breakers, each of which is connected to one of synchronous generators. The circuit breakers may be referred to as first, second and third circuit breakers.

The SG 150 may be installed on a propeller shaft connecting a propeller 140 and a main engine 160 of a ship and may convert kinetic energy of the main engine 160 transmitted through the propeller shaft into electrical energy. The SG 150 may include an induction generator, and the induction generator may include a squirrel-cage induction generator (SCIG). In the following description, the SG 150 may also be referred to as an SCIG 150.

The power converter 200 may be disposed between the SG 150 and the isolation transformer 230 and may be implemented as a back-to-back converter. The back-to-back converter may include a generator-side converter including the SG 150, a grid-side converter including a point of common coupling (PCC) of a shipboard microgrid, and a DC-link capacitor connected therebetween. The generator-side converter and the grid-side converter may be configured to share a DC-link voltage of the DC-link capacitor. The PCC may refer to a common bus of onboard power generation resources that supply power to loads inside and outside a ship which are connected to a distributed shipboard microgrid.

In addition, unlike wind or solar power control such as maximum power point tracking, the grid-side converter of the back-to-back converter controls power flow. Accordingly, the generator-side converter may be configured to maintain a DC-link voltage of the DC-link capacitor at a desired level by controlling torque of the SCIG 150, and the grid-side converter may be configured to generate power as one of power generation units including independent distributed generators or synchronous generators.

The isolation transformer 230 functions to physically separate a branch grid including the SG 150 and the power converter 200, which are alternative energy resources in the shipboard microgrid, from a main grid of the shipboard microgrid.

The circuit breaker 250 functions to selectively connect or disconnect the branch system, which includes the SG 150, the power converter 200, and the isolation transformer 230, to or from the main grid of the shipboard microgrid. The circuit breaker 250 may be installed on the switchboard 130 together with other circuit breakers. In that case, the circuit breaker 250 may be referred to as a fourth circuit breaker.

The above-described shipboard microgrid may be managed by a ship power management system (SPMS) 300. The SPMS 300 may control power of the synchronous generators 100, 110, and 120, the SG 150, and the power converter 200.

In addition, when the SG 150 is to be operated, the SPMS 300 may be implement the generator-side converter of the power converter 200 as an active front-end converter such that external reactive power may be fed for magnetization of the SG 150.

In addition, the SMPS 300 may be configured to apply a grid input control sequence that allows power generated by the SG 150 to be efficiently supplied to the shipboard microgrid.

In addition, in order to stabilize the grid-forming distributed power generation of the SG 150, the SMPS 300 may be configured to apply preset fixed virtual impedance (abbreviated as "VImp") to a voltage control circuit of the SMPS 300 in consideration of a bonded impedance X-to-resistance R ratio (bounded X/R ratio) of the shipboard microgrid.

In addition, the SPMS 300 may be configured such that the grid-side converter of the power converter 200 performs SFC. Moreover, the SMPS 300 may be configured such that secondary voltage control is performed by the power converter 200 itself in a shipboard microgrid in which a secondary voltage controller is not present.

Self-secondary voltage control may be configured to control a voltage based on different target values according to a parallel operation and a standalone operation. For example, during a parallel operation of the SG 150 and at least one synchronous generator 100, the SMPS 300 may perform voltage control based on a target power factor value. During a standalone operation of the SG 150, the SMPS 300 may perform voltage control of the SG 150, the power converter 200, or the shipboard microgrid by setting a secondary-side voltage of the isolation transformer 230 as a target voltage (for example, 1 pu).

For reference, since most ships use AC power grids, such alternative energy resources should be connected to an onboard power grid through power converters. A power converter should basically operate in parallel with an existing onboard synchronous generator to supply power to an onboard load and should also have a function capable of independently supplying power to the onboard load according to an operating state of a ship. Therefore, an alternative energy-based power converter of a ship should perform grid-forming control and may also perform grid-feeding control according to the characteristics of alternative energy.

For example, grid-feeding control is required for purposes such as reference power tracking control (P-Q control) for maximum power point tracking of photovoltaic generation, and power feeding restriction in an initial magnetization phase of an SGIC. In addition, since a shipboard microgrid is an independent standalone grid and should be capable of always supplying power to onboard loads, even in a situation in which a power converter performs grid-feeding control, the power converter should be capable of instantaneously switching a control mode to a grid-forming control mode at any time, thereby enabling a standalone operation of alternative energy sources.

While, in a grid-feeding mode, active power cand reactive power control is performed in synchronization with a grid through a phase-locked loop, in a grid-forming mode, an output voltage magnitude and a frequency target value are determined by a set droop (load sharing). Therefore, when a grid-feeding mode is switched to a grid-forming mode, an output voltage of a power converter connected to an alternative energy resource changes instantaneously, and in this case, the output voltage of the power converter has a different phase, magnitude, and frequency from a grid voltage. This acts as a kind of disturbance to a power converter control grid, and since the low inertia of a typical power converter cannot withstand this disturbance, an alternative energy resource may not be switched to a grid-forming mode and may be disconnected from a grid due to frequency and voltage divergence.

Accordingly, in the present embodiment, virtual impedance is applied to a voltage control of a power converter connected to a grid-forming SG, thereby providing a ship in which the power converter can have sufficient inertia against disturbances, and power generated by the SG can be effectively supplied to a shipboard microgrid. In addition, according to the present embodiment, it is possible to provide a ship in which, by using a self-secondary voltage control algorithm, a voltage drop within a shaft generator system can be effectively compensated for by a power converter connected to an SG in a shipboard microgrid, and even in an SMPS in which a secondary voltage controller is not present, self-secondary voltage control can be performed according to parallel or a standalone operation of the SG by using the power converter connected to the SG.

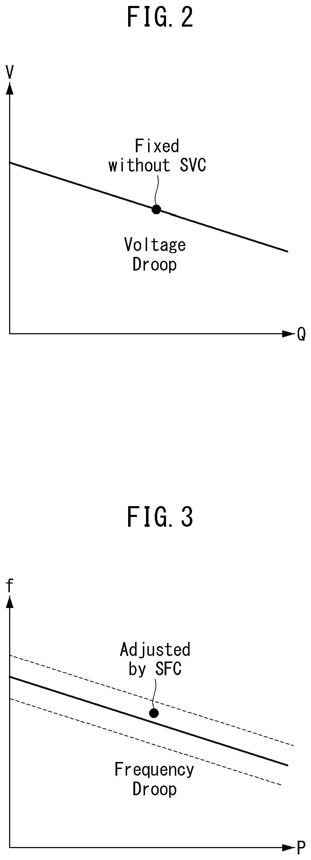

FIG. 2 is a graph for describing the voltage droop characteristics of an SMPS that may be adopted in the shipboard microgrid of FIG. 1. FIG. 3 is a graph for describing the frequency droop characteristics of an SMPS that may be adopted in the shipboard microgrid of FIG. 1.

As illustrated in FIG. 2, since three or four products of the same manufacturer are installed as synchronous generators in consideration of maintenance, the voltage droop characteristics of each synchronous generator by an AVR may be very similar among the synchronous generators and thus may be fixed without applying a separate secondary voltage control (SVC). An AVR may be provided integrally with the synchronous generator.

Meanwhile, as illustrated in FIG. 3, even synchronous generators of the same type may have different combustion characteristics of a generator engine. Therefore, the frequency droop characteristics between a plurality of synchronous generators used in a shipboard microgrid of a single ship may be adjusted through SFC.

Moreover, in a distributed shipboard microgrid including synchronous generators as well as an alternative energy resource, particularly an SG coupled to a propeller shaft of a ship, it is necessary to perform at least one of SVC and SFC such that power of the SG may be effectively supplied to a PCC of the shipboard microgrid in a grid-forming operation mode, that is, the SG may operate in conjunction with the synchronous generators.

Therefore, a ship power management apparatus of the present embodiment may be configured such that a shaft generator system including an SG and a power converter operates as a plug-and-play distributed power source that replicates the operation of a synchronous generator.

In particular, although an SG is typically operated as an independent distributed generator during normal operation of a ship, there are limitations due to a decrease in surplus power of a propulsion system such as an engine and the dependence of shaft generator power on a shaft speed. In order to ensure the safe and efficient operation of an SG, a ship power management apparatus may be configured to monitor the above-described limitations and implement measures such as load shedding or starting the operation of a synchronous generator in specific situations. These measures may include measures against situations such as overloading of an SG due to high power loads in a shipboard microgrid, mechanical load fluctuations of a propulsion engine due to rough seas, and engine deceleration of the propulsion engine.

In this way, a ship power management apparatus of the present embodiment may be configured to apply a rapid grid input sequence of an SG in a distributed shipboard microgrid including an SG. In addition, a ship power management apparatus may be configured to apply a fixed virtual impedance-based control algorithm to stably switch an operation mode from grid-feeding to grid-forming. In addition, the ship power management apparatus may be configured such that self-SVC is applied by a power converter of an SG in a grid-forming operation mode.

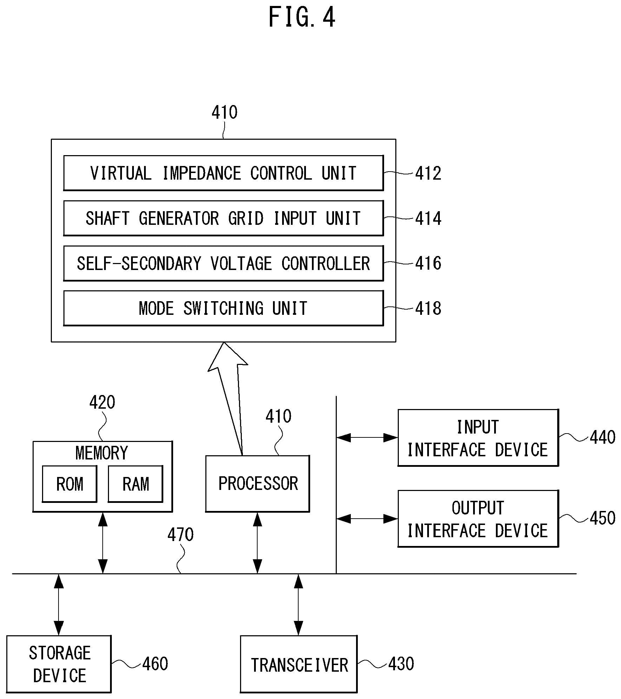

FIG. 4 is a schematic block diagram of a ship power management apparatus that may be adopted in an SMPS of the shipboard microgrid of FIG. 1.

Referring to FIG. 4, a ship power management apparatus 400 may correspond to an SPMS 300 that manages the shipboard microgrid of FIG. 1. The ship power management apparatus 400 may include at least one processor 410 and a memory 420. In addition, the ship power management apparatus 400 may further include a transceiver 430 connected to a terminal or communication device of a user or a manager of a ship network, an external dedicated power distribution network, or a commercial power distribution network to performs communication. In addition, the ship power management apparatus 400 may further include an input interface device 440, an output interface device 450, a storage device 460, and the like. Respective components included in the ship power management apparatus 400 may be connected by a bus 470 to communicate with each other.

More specifically, the processor 410 may execute a software module or program command stored in at least one of the memory 420 and the storage device 460. As an example, the processor 410 may include a virtual impedance control unit 412, a shaft generator grid input unit 414, a self-secondary voltage controller 416, and a mode switching unit 418. These components may be mounted on the processor 410 in the form of a software module or program command, and a configuration and/or function thereof will be described in detail below. The processor 410 may be implemented as a central processing unit (CPU), a graphics processing unit (GPU), or a dedicated processor on which methods according to embodiments of the present invention are performed.

Each of the memory 420 and the storage device 460 may include at least one of a volatile storage medium and a non-volatile storage medium. For example, the memory 420 may include at least one of a read-only memory (ROM) and a random access memory (RAM).

The transceiver 430 may include a communication interface or a sub-communication system for communication inside or outside a ship or between the inside and the outside of the ship, for example, a short-range wireless network, cable connection, satellite communication, or wireless communication with a universal base station.

The input interface device 440 may include at least one selected from input units such as a keyboard, a microphone, a touchpad, and a touchscreen, and an input signal processing unit that maps or processes a signal input through at least one input unit according to a pre-stored command.

The output interface device 450 may include an output signal processing unit that maps or processes an output signal in the form of a pre-stored signal or at a level under the control of the processor 410, and at least one output unit that outputs a corresponding signal or information included in the signal in at least one form selected from vibrations, light, and sound at a predetermined level according to a signal of the output signal processing unit. The at least one output unit may include at least one selected from output units such as a speaker, a display device, a printer, an optical output device, and a vibration output device.

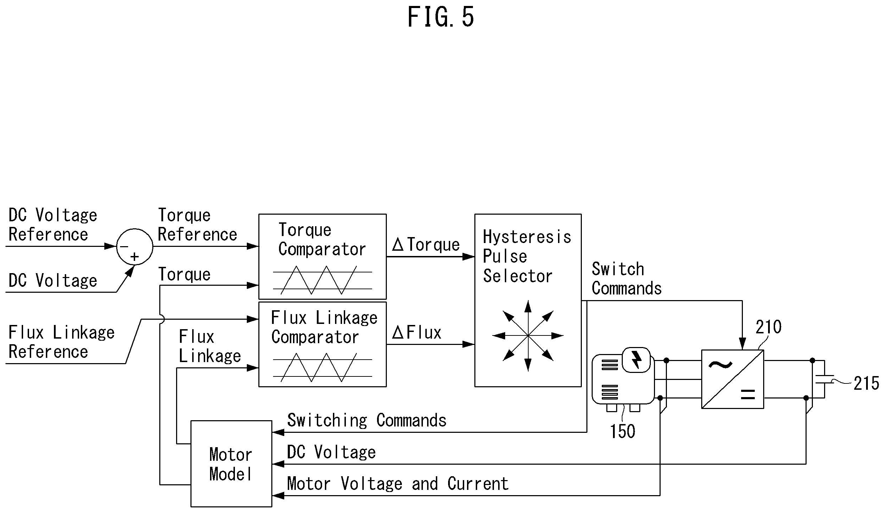

FIG. 5 is a block diagram for describing a control process of an SGIC that may be adopted in the ship power management apparatus of FIG. 4.

First, a control environment for an SCIG 150 will be described as follows. A direct torque control (DTC) method may be used for the control of the SCIG 150. Unlike flux vector control which relies on a rotor angle position for closed-loop control, the DTC method does not require a position encoder for providing feedback on a rotor shaft speed or position. The DTC method is model-based and thus relies on accurate model parameters for optimal control performance. Therefore, a stator flux linkage vector and torque generated by this vector may be estimated based on a motor model of the SCIG 150.

In this way, estimation of stator flux linkage is important in an SCIG control process of the present embodiment. Since estimation of stator flux linkage relies on the accuracy of stator resistance measured in the SCIG 150, there is a need to monitor accurate stator resistance in real time for accurate estimation of the stator flux linkage. That is, when torque control fails due to uncertainty in SCIG model parameters, and an imbalance between power supply and power demand occurs, a power outage may occur on a ship.

Meanwhile, the SCIG 150 is not designed to perform self-excitation, and thus external reactive power is required for magnetization. Accordingly, a power converter connected to the ship power management apparatus of the present embodiment may be configured to use an active front-end converter instead of a passive converter.

As shown in FIG. 5, the ship power management apparatus of the present embodiment may be configured to input a motor voltage and current of the SCIG 150, a DC voltage, and a switching command to a motor model and receive values or signals for torque and flux linkage from the motor model. The DC voltage may be a voltage between DC-link capacitor terminals of a generator-side converter connected to the SCIG 150 and may correspond to a DC-link voltage.

In addition, the ship power management apparatus may be configured to generate a torque reference based on a DC voltage reference and a DC voltage and compare torque with the torque reference through a torque comparator to calculate a torque error ($\Delta$Torque, $\Delta$T). In addition, the ship power management apparatus may be configured to compare a flux linkage with a flux linkage reference through a flux linkage comparator to calculate a flux error ($\Delta$Flux, $\Delta$F). The ship power management apparatus may be configured to input the torque error and the flux error to a hysteresis pulse selector (HPS) and generate switch commands based on the torque error and the flux error through the HPS. The switch command may be used to control the generator-side converter connected to SCIG 150.

The above-described ship power management apparatus may perform SCIG control phases described below to allow the SCIG 150 to function as a distributed generator.

In the description of the present embodiment, the term "reference" may refer to an electronic device that ideally generates a corresponding physical quantity constantly or fixedly irrespective of load, power supply fluctuations, temperature changes, and time, or may refer to a reference physical quantity generated by the electronic device. For example, a voltage reference may refer to an electronic device that ideally generates a constant or fixed voltage irrespective of surrounding environments or conditions, or a voltage generated by the electronic device. The generated voltage may correspond to a reference voltage.

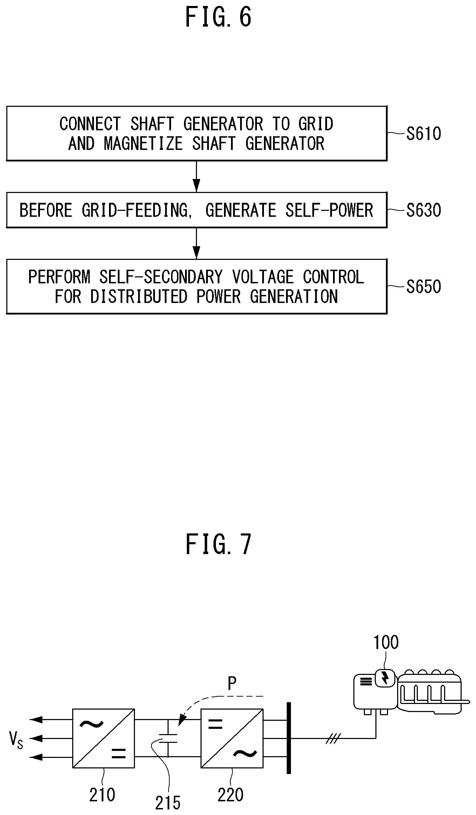

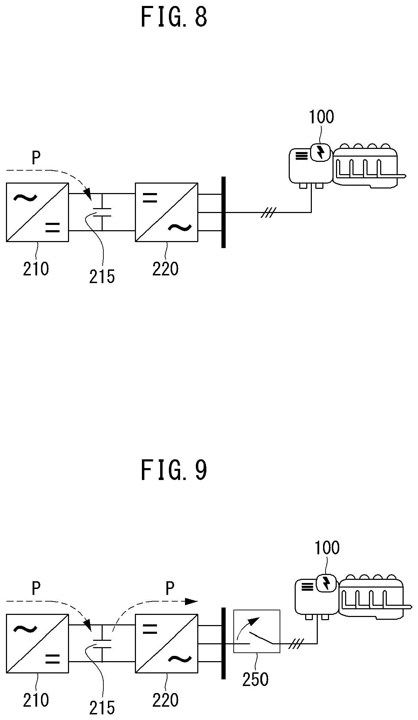

FIG. 6 is a flowchart of SCIG control phases that may be performed by the ship power management apparatus of FIG. 5. FIG. 7 is a block diagram for describing a first operation mode (Phase I) among the SCIG control phases of FIG. 6. FIG. 8 is a block diagram for describing a second operation mode (Phase II) among the SCIG control phases of FIG. 6. FIG. 9 is a block diagram for describing a third operation mode (Phase III among the SCIG control phases of FIG. 6.

Referring to FIG. 6, the ship power management apparatus may perform three control phases or first to third operation modes as a grid input sequence of a grid-forming SCIG. That is, a ship power management method performed by the ship power management apparatus may include operation S610 of connecting an SG to a grid which is at least a part of a shipboard microgrid, and magnetizing the shaft generator using a grid-side current charged in a DC-link capacitor, an operation S630 of, before the shaft generator feeds power to the grid, performing power control on a grid-side converter with a zero power reference to generate self-power such that the generator-side converter charges the DC-link capacitor, and an operation S650 of performing self-SVC for distributed power generation of the SG such that the SG operates as a distributed generator of the shipboard microgrid.

To describe each operation in more detail, as shown in FIG. 7, in a first control phase (phase I), a grid-side converter 220 may receive power P from the shipboard microgrid, to which at least one synchronous generator 100 is connected, under the control of the ship power management apparatus to charge a DC-link capacitor 215. The grid-side converter 220 may perform power control to charge the DC-link capacitor 215 up to 90% of a rated DC voltage of the DC-link capacitor 215 and maintain the charged DC voltage.

In addition, in the first control phase, a generator-side converter 210 may magnetize a rotor of an SCIG using a DC-link voltage of the DC-link capacitor 215. Magnetization may be a process of generating a magnetic field by allowing a current according to a predetermined voltage $V_S$ of the generator-side converter 210 to flow in a coil of the SG and may be referred to as an ability to generate a magnetomotive force, that is, a magnetic flux or magnetic current, in the coil. In the first control phase, since the SG has not started power generation, torque of the generator may be controlled to zero.

A second control phase (phase II) is an operation of allowing the SG to start self-generation and checking whether the SG normally generates power. As shown in FIG. 8, in the second control phase, the grid-side converter 220 may be controlled in a grid-feeding mode to block power from being supplied to a generator from a grid which is receiving power from at least one synchronous generator 100. In this case, a power reference value of the grid-side converter 220 is zero. That is, the grid-side converter 220 may be powercontrolled with a zero power reference.

In addition, in the second control phase, the generator-side converter 210 may be controlled to start self-generation and charge the DC-link capacitor 215 to a rated voltage. To this end, the ship power management apparatus may control torque of the SG. When self-generation is normally performed, and electric energy of the SG charges the DC-link capacitor 215 from a DC-link voltage to a rated voltage of the DC-link capacitor 215, the ship power management apparatus may switch a control mode of a shaft generator system to a third control phase.

In the third control phase (phase III), as shown in FIG. 9, the grid-side converter 220 may be switched to a grid-forming mode such that an SG based on an SGIC may perform the same role as the synchronous generator 100 of the shipboard microgrid. In this case, in order for the grid-side converter 220 to have sufficient inertia for a grid-forming mode based on virtual impedance, the ship power management apparatus may perform voltage control (voltage control with droop) on a voltage control circuit of the grid-side converter 220 according to a control droop coefficient determined based on or selected from measurement values that are preset or collected in real time. Thus, the grid-side converter 220 may stably and quickly switch from a grid-feeding mode to a grid-forming mode, that is, switch instantly. The ship power management apparatus may maintain a circuit breaker 250 in an open state until just before performing mode switching of the grid-side converter 220.

In addition, in the third control phase, the generator-side converter 210 may operate as a grid-forming power converter to supply power to the shipboard microgrid in accordance with a PCC of the shipboard microgrid to be properly connected to the shipboard microgrid, and/or maintain a voltage of the DC-link capacitor 215. That is, the ship power management apparatus may control at least one of the SG and the generator-side converter 210 to perform at least one of torque control and flux control on the SG.

According to the first to third control phases of the above-described present embodiment, unnecessary circuit breaker operations and synchronization processes can be omitted, thereby obtaining an advantage of a rapid and efficient system operation.

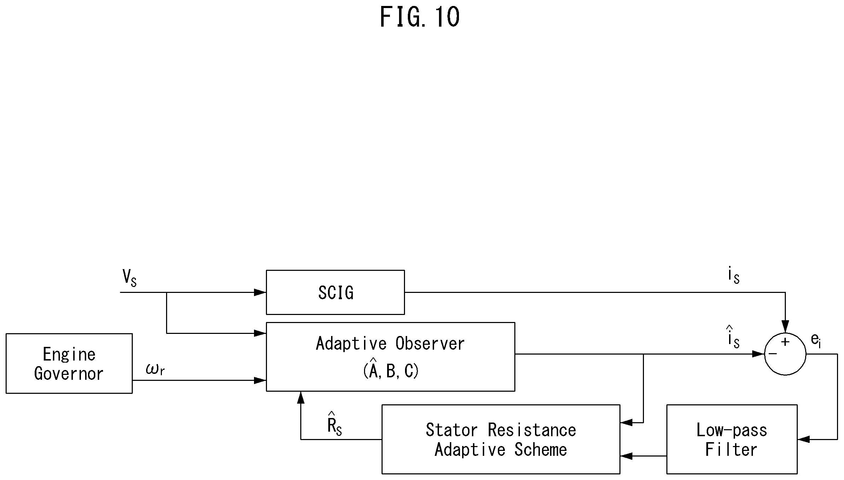

FIG. 10 is a block diagram for describing an adaptive flux control process that may be applied to the SCIG control phases of FIG. 6.

Referring to FIG. 10, an adaptive flux observer (abbreviated as "adaptive observer") that may be provided in a ship power management apparatus may generate an estimated stator current vector $\hat{i}_s$ based on a stator voltage vector $V_s$ of an SG, a rotor speed $\omega_r$ of an SCIG obtained from an engine governor, and an estimated resistance $\hat{R}_s$ obtained from a stator resistance adaptive scheme processor, and may generate a state estimation error vector $\varepsilon_i$ of an observer through an operation of subtracting the estimated stator current vector $\hat{i}_s$ from a stator current $i_s$ obtained from the SCIG. A state estimation error vector may be input to the stator resistance adaptive scheme processor through a low-pass filter (LPF), and an estimated stator current vector from the adaptive flux observer may be input thereto.

In this way, in the present embodiment, assuming that a ship power management apparatus may obtain a rotor speed measured by an engine governor, it can be understood that accurate stator resistance of the SCIG may be estimated through DTC of the SCIG. In fact, this assumption may be applied to distributed applications because a rotor speed is measured by the engine governor.

For example, a state space model of the SCIG may be set on a rotor reference dq-axis. In this case, a state observer that uses an estimated state matrix, which is a semi-positive definite matrix, may be used to resolve uncertain stator resistance in a state matrix A. By using such a state observer, a state estimation error of an SG may be calculated, and an error vector with a stator current error may be defined. By defining a semi-positive definite Lyapunov function including a quadratic function of an error vector and a stator resistance error with a positive gain, a state observer may adaptively estimate stator resistance.

The semi-positive definite Lyapunov function is one of methods of determining stability without finding a solution, in which all components of an estimated state matrix may be real numbers and a correction matrix with a predetermined symmetric magnitude may be defined to satisfy a specific inequality for all vectors. Since such a semi-positive definite Lyapunov function is convex downward in a three-dimensional graph, when a derivative thereof is equal to zero, the semi-positive definite Lyapunov function may converge to a minimum.

According to the derivative of the semi-positive definite Lyapunov function, considering that an error vector inherently depends on estimated resistance, a minimum point of the Lyapunov function may be obtained by minimizing the sum of sums. Therefore, the estimation of stator resistance may be obtained by solving an equation using the derivative of the semi-positive definite Lyapunov function. In this case, for fast convergence of the solution to the equation, integral control using an LPF may be applied.

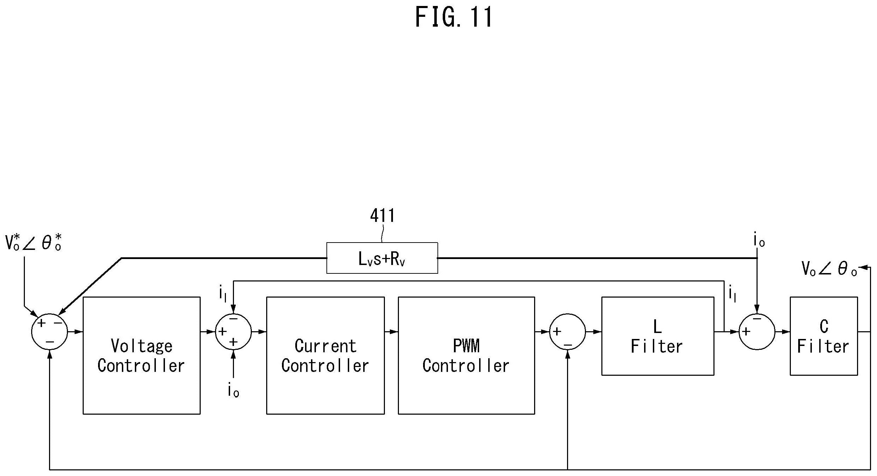

FIG. 11 is a block diagram for describing a virtual impedance-based voltage control process of a grid-forming power converter that may be adopted in the ship power management apparatus of FIG. 4.

As illustrated in FIG. 11, the ship power management apparatus may perform voltage control of a power converter connected to an SG based on virtual impedance. When the power converter operates in a grid-forming mode, in addition to a feedback control circuit structure using a voltage controller, a current controller, a pulse width modulation (PWM) controller, an inductor filter (L filter), and a capacitor filter (C filter), the power converter may have a current feedback circuit structure in which an output current $i_1$ of the inductor filter is reflected in an input of the current controller as well as a structure in which virtual impedance 411 is applied to an input of the voltage controller.

In this way, a control loop of a grid-side converter may be divided into an outer loop and an inner loop. The outer loop may be referred to as an outer control loop, and the inner loop may be referred to as an inner control loop. The outer control loop may be configured to adjust a reference voltage based on measured power and a droop function. The inner control loop may be configured to control an output voltage according to a reference of the outer control loop using two controllers, that is, a voltage controller and a current controller.

In particular, when the ship power management apparatus inputs, to the voltage controller, an output voltage reference $V_o^* \angle \theta_o^*$ having a phase angle reference $\theta_o^*$ of an output voltage of the grid-side converter, the ship power management apparatus may control a voltage control operation of the grid-side converter to reflect an error with a feedback output voltage reference $V_o \angle \theta_o$ and simultaneously reflect the predetermined virtual impedance 411 corresponding to an output current $i_o$ of the grid-side converter.

As described above, the ship power management apparatus may perform voltage control based on the virtual impedance 411 on the grid-side converter to ensure system stability during mode switching of the power converter. The virtual impedance 411 may include fixed virtual impedance that is predetermined or fixed. The virtual impedance 411 may have a form obtained by adding virtual inductance $L_v$ and virtual resistance $R_v$. When such virtual impedance 411 is Laplace-transformed, the virtual impedance 411 may be expressed as "$L_v s + R_v$". The virtual inductance may also be referred to as a virtual inductance component, and the virtual resistance may also be referred to as a virtual resistance component.

According to virtual impedance-based voltage control of the present embodiment, the grid-side converter operates as a voltage source and may effectively control an output voltage according to a predefined droop function similar to that of a synchronous generator. In addition, by adopting predetermined virtual impedance to change output impedance of the grid-side converter, a closed-loop transfer function of the inner control loop may be adjusted. The effect of the virtual impedance on system dynamics may be analyzed by tracking eigenvalues.

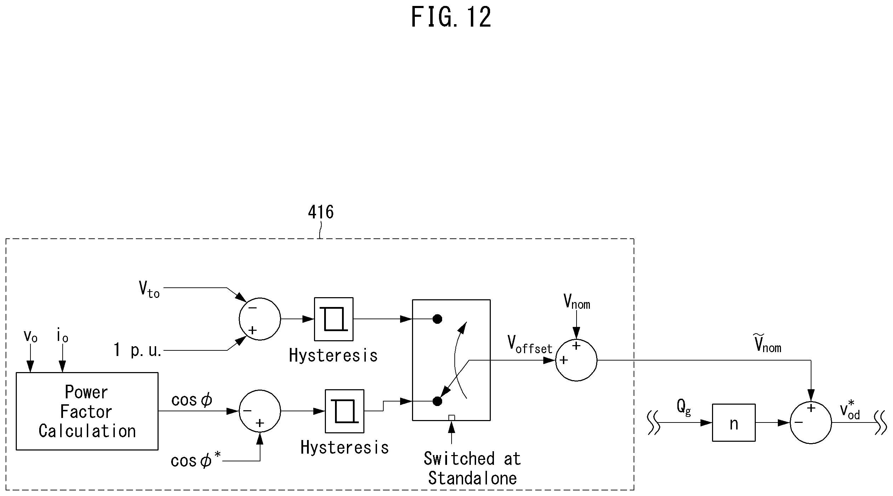

FIG. 12 is an exemplary diagram for describing a self-SVC structure that may be adopted in a shipboard microgrid operation method according to another embodiment of the present invention.

Referring to FIG. 12, a self-secondary voltage controller 416 that may be included in a ship power controller may include a power factor calculator, adders/subtractors, hysteresis comparators, and a transfer switch for switching to a standalone operation, and may be configured to provide, to a grid-forming power converter, a controlled nominal output voltage obtained by adding an offset voltage $V_{offset}$ to a nominal output voltage $V_{nom}$. As shown in FIG. 11, the grid-forming power converter may have impedance due to a current feedback circuit.

In the present embodiment, the problem to be solved is that when an isolation transformer is installed at an output terminal of a shaft generator system to reduce common mode noise, a voltage drop occurs according to an output current. Therefore, it is difficult to control the same voltage droop characteristics as an AVR of a synchronous generator. In order to solve a problem such as reactive power sharing with a synchronous generator and a problem of a voltage drop during a standalone operation, self-SVC is applied.

According to the above-described self-secondary voltage controller structure, a voltage value of a voltage droop curve may be adjusted based on a hysteresis-based control value. During a parallel operation with a synchronous generator, SVC may be performed based on a target power factor value, that is, a power factor value of a typical ship load, for example, 0.8. During a standalone operation, SVC may be performed to maintain a voltage of a secondary side of an isolation transformer at a rated voltage. In order to prevent self-SVC from interfering with a damping function of virtual impedance, a bandwidth of a self-secondary voltage controller 416 may be selected to be about 1/20 of a bandwidth of a grid-forming power converter.

Hereinafter, in order to verify virtual impedance control, a shaft generator grid connection sequence, and self-SVC, stability evaluation using root locus, and simulation and experimental results will be described.

First, for modeling a grid-forming power converter and performing stability evaluation based on root locus, an equation model of the grid-forming power converter was generated, and the stability of a system was evaluated according to whether virtual impedance was applied and whether components were combined.

The detailed definitions of symbols used in equations of an equation model described below are as shown in Table 1 below.

[Table 1]

| Symbol | Contents |
|---|---|
| $a,b,c,d,e,f,g,h$ | Small-signal model constants |
| $G_{pwm}(s),\ G(s)$ | Transfer functions of PWM and inner loop |
| $G_v(s), G_i(s)$ | Transfer functions of voltage controller and current controller |
| $k_{pwm}, \tau_{pwm}$ | Gain and time constant of PWM |
| $k_{vp},\ k_{vi}, k_{ip}, k_{ii}$ | Gains of grid-forming controller |
| $L_f, C_f, R_f$ | Filter inductance, capacitance, and resistance |
| $L_v, R_v$ | Virtual inductance and virtual resistance |
| $m_p, m_i, n$ | Frequency and voltage droop efficiency |
| $p_g, q_g, P_g, Q_g$ | Active and reactive powers, and low-pass-filtered active and reactive powers |
| $R_g, X_g, Z_g, \delta_g$ | Line resistance, reactance, impedance magnitude, and impedance angle |
| $R_o, X_o, i_o, i_l$ | Output resistance, reactance, output current, and line current |
| $u_d, u_g$ | Converter voltage command |
| $V_g, V_o, V_{to}$ | Bus voltage, converter output voltage, and isolation transformer secondary voltage |
| $v_o$ | Converter output voltage |
| $Z_o(s), \tilde{Z}_o(s)$ | Output impedance without virtual impedance and output impedance with virtual impedance |
| $\delta_o, \phi, \phi^*$ | Load angle, power factor angle, and power factor reference |
| $\theta_o, \theta_g, \theta_{og}$ | Phase angle of converter output voltage, bus voltage, and load angle |
| $\overline{\theta_g}$ | Load angle at equilibrium point |
| $\omega_c$ | Cutoff frequency of LPF |
| $\omega_{nom}, V_{nom}$ | Nominal values of angular frequency and output voltage |
| $\omega_o,\ \omega_o^*, V_o,\ V_o^*$ | Angular frequency and reference thereof, and output voltage and reference thereof |

First, active power and reactive power of a power generated by an SG may be expressed as in Equation 1.

【Equation 1】

$$p_g = \frac{V_o V_g}{Z_g}\cos(\delta_g - \theta_{og}) - \frac{V_g^2}{Z_g}\cos\delta_g, \quad q_g = \frac{V_o V_g}{Z_g}\sin(\delta_g - \theta_{og}) - \frac{V_g^2}{Z_g}\sin\delta_g$$

In Equation 1, $\theta_{og} = (\theta_o - \theta_g)$ and $\delta_g = \tan^{-1}(X_g/R_g)$.

A frequency and magnitude of a voltage according to a droop, which reflects secondary frequency control by a ship power controller, may be defined as in Equation 2. The ship power controller may be included in a ship power management apparatus.

【Equation 2】

$$\omega_o^* = \omega_{nom} - \left(m_p + \frac{m_i}{s}\right)P_g, \quad V_o^* = V_{nom} - nQ_g.$$

Meanwhile, a voltage control equation model of the grid-forming power converter used in FIG. 11 may be expressed as in Equation 3 below.

【Equation 3】

$$v_o = G(s)v_o^* - \left[Z_o(s) + \underbrace{\frac{(L_v s + R_v)G_v(s)G_i(s)G_{pwm}(s)}{T(s)}}_{\text{VImp term}}\right]i_o$$

$$= G(s)v_o^* - \tilde{Z}_o(s)i_o$$

In Equation 3, $T(s) = L_f C_f s^2 + R_f C_f s + G_i(s)G_{pwm}(s)(G_v(s) + C_f s) + G_v(s)$.

According to Equation 3, it can be seen that an output voltage of the grid-forming power converter is determined by subtracting the product of impedance $\tilde{Z}_o(s)$ and an output current from a transfer function G(s) according to a voltage target value and a voltage output value. In FIG. 11, a model of an output voltage of a power converter excluding virtual impedance may be expressed as in Equation 4.

【Equation 4】

$$v_o = \frac{G_v(s)G_i(s)G_{pwm}(s)}{T(s)}v_o^* - \frac{L_f s + R_f + 2G_i(s)G_{pwm}(s)}{T(s)}i_o$$

$$= G(s)v_o^* - Z_o(s)i_o$$

Since only impedances $\tilde{Z}_o(s)$ and $Z_o(s)$ of Equations 3 and 4 are different, the performance of virtual impedance may be evaluated by changing only an impedance value after generating a system model.

By substituting a voltage magnitude defined in Equation 2 into Equation 4, Equation 5 for a voltage magnitude may be generated as follows.

【Equation 5】

$$V_o = |G(s)|(V_{nom} - nQ_g) - \frac{R_o}{V_o}P_g - \frac{X_o}{V_o}Q_g$$

By applying an LPF to Equation 1 above and substituting the result into Equation 5, Equation 6 below may be obtained.

【Equation 6】

$$V_o = |G(s)|(V_{nom} - nQ_g) - \frac{R_o}{V_o}\left(\frac{\omega_c}{s+\omega_c}\right)\left(\frac{V_oV_g}{Z_g}\cos(\delta_g - \theta_{og}) - \frac{V_g^2}{Z_g}\cos\delta_g\right)$$
$$- \frac{X_o}{V_o}\left(\frac{\omega_c}{s+\omega_c}\right)\left(\frac{V_oV_g}{Z_g}\sin(\delta_g - \theta_{og}) - \frac{V_g^2}{Z_g}\sin\delta_g\right)$$

Equation 7 below may be obtained by integrating a frequency equation of Equation 2 above, applying an LPF to an active power value applied in Equation 1, and substituting Equation 4.

【Equation 7】

$$\theta_o = \theta_{nom} - m_p\int_{-\infty}^{t}P_g d\tau - m_i\int_{-\infty}^{t}\int P_g d\tau - \angle G(s) - \delta_o$$

Here, $\delta_0$ denotes a load angle of a power converter and is defined by a trigonometric function as in Equation 8 below.

【Equation 8】

$$\delta_o = \sin^{-1}\frac{X_oI_o\cos\phi - R_oI_o\sin\phi}{V_o^*}$$

In Equation 8, assuming that a value of $\delta_0$ is relatively very small and $V_o \approx V_o^*$, Equation 8 may be simplified as shown in Equation 9 below.

【Equation 9】

$$\delta_o = \sin^{-1}\frac{\dfrac{X_o}{V_o}P_g - \dfrac{R_o}{V_o}Q_g}{V_o^*} \approx \frac{\dfrac{X_o}{V_o}P_g - \dfrac{R_o}{V_o}Q_g}{V_o^*} \approx \frac{X_o}{V_o^2}P_g - \frac{R_o}{V_o^2}Q_g$$

Meanwhile, Equation 1 to which an LPF is applied may be expressed in a linearized form as in Equation 10 below.

【Equation 10】

$$\Delta P_g = \left(\frac{\omega_c}{s+\omega_c}\right)\left(g\Delta V_o + h\Delta\theta_o\right), \Delta Q_g = \left(\frac{\omega_c}{s+\omega_c}\right)\left(e\Delta V_o - f\Delta\theta_o\right)$$

In Equation 10, $\overline{\theta}_g = \delta_g - \theta_{o0} + \theta_g$.

$$e = \frac{V_g}{Z_g}\sin\overline{\theta}_g, f = \frac{V_{o0}V_g}{Z_g}\cos\overline{\theta}_g, g = \frac{V_g}{Z_g}\cos\overline{\theta}_g, h = \frac{V_{o0}V_g}{Z_g}\sin\overline{\theta}_g$$

Further,

By substituting Equation 10 into Equation 6, a linear model of a voltage magnitude of the grid-forming power converter may be obtained. The linear model of the voltage magnitude of the grid-forming power converter may be expressed as in Equation 11.

【Equation 11】

$$\Delta V_o = -nG(s)\left(\frac{\omega_c}{s+\omega_c}\right)\left(e\Delta V_o - f\Delta\theta_o\right) - \left(\frac{\omega_c}{s+\omega_c}\right)\left(a\Delta V_o + b\Delta\theta_o\right)$$

In Equation 11, $a = \dfrac{R_o V_g^2}{V_{o0}^2 Z_g}\cos\delta_g + \dfrac{X_o V_g^2}{V_{o0}^2 Z_g}\sin\delta_g, b = \dfrac{R_o V_g}{Z_g}\sin\overline{\theta}_g - \dfrac{X_o V_g}{Z_g}\cos\overline{\theta}_g$.

By substituting Equations 9 and 10 above into Equation 7, a linear model of a voltage phase of the grid-forming power converter may be obtained. The linear model of the voltage phase of the grid-forming power converter may be expressed as in Equation 12.

【Equation 12】

$$\Delta\theta_o = -\frac{1}{s}\left(m_p + \frac{m_i}{s}\right)\left(\frac{\omega_c}{s+\omega_c}\right)\left(g\Delta V_o + h\Delta\theta_o\right) - \left(\frac{\omega_c}{s+\omega_c}\right)\left(c\Delta V_o + d\Delta\theta_o\right)$$

In Equation 12, $c = \dfrac{2X_o V_g^2}{V_{o0}^2 Z_g}\cos\delta_g - \dfrac{2R_o V_g^2}{V_{o0}^2 Z_g}\sin\delta_g, d = \dfrac{X_o V_g}{Z_g}\sin\overline{\theta}_g + \dfrac{R_o V_g}{Z_g}\cos\overline{\theta}_g$.

Next, by combining Equations 11 and 12, a state space model of the grid-forming power converter may be obtained. The state space model of the grid-forming power converter may be expressed as in Equation 13.

【Equation 13】

$$\dot{\Delta X}_{gf} = A_{gf}\Delta X_{gf} = \begin{bmatrix} A_1 & A_2 \end{bmatrix}\Delta X_{gf}$$

In Equation 13, $X_{gf} = [\Delta\theta_o\ \Delta D\theta_o\ ...\ \Delta D^5\theta_o\ \Delta V_o\ \Delta DV_o\ \Delta D^5 V_o]^T$. $D^n$ denotes $n^{th}$ order differentiation.
Parameters used in Equation 13 above may be obtained as follows. First, G(s) used in Equation 11 may be arranged as in Equation 15.

【Equation 14】

$$G(s) = \frac{g_{n2}s^2 + g_{n1}s + g_{n0}}{g_{d5}s^5 + g_{d4}s^4 + g_{d3}s^3 + g_{d2}s^2 + g_{d1}s + g_{d0}}$$

In Equation 14,

$$g_{n0} = g_{n2} = g_{d0} = k_{vp}k_{ip}k_{pwm}, \qquad g_{n1} = k_{pwm}(k_{vp}k_{ii} + k_{vi}k_{ip}),$$

$$g_{d1} = k_{pwm}k_{ip}k_{vi} + k_{pwm}k_{ii}k_{vp} + k_{vi},$$

$$g_{d2} = k_{pwm}k_{ip}k_{vp} + k_{pwm}k_{ii}C_f + k_{vp} + k_{vi}\tau_{pwm}, \qquad g_{d5} = L_f C_f \tau_{pwm},$$

$$g_{d3} = R_f C_f + k_{pwm}k_{ip}C_f + k_{vp}\tau_{pwm}, \quad \text{and} \quad g_{d4} = L_f C_f + R_f C_f \tau_{pwm}.$$

Next, by substituting Equation 14 into Equation 11, a differential equation for $\Delta V_o$ may be obtained as in Equation 15.

【Equation 15】

$$(g_{d5}s^6 - b_{26}s^6 - b_{25}s^4 - b_{24}s^3 - b_{23}s^2 - b_{22}s - b_{21})\Delta V_o$$

$$= (b_{16}s^5 + b_{15}s^4 + b_{14}s^3 + b_{13}s^2 + b_{12}s + b_{11})\Delta\theta_o$$

Detailed definitions of parameters in Equation 15 are as follows.

$$b_{11} = n\omega_c f g_{n0} - \omega_c b g_{d0}, \qquad b_{21} = \zeta\omega_c g_{d0} - n\omega_c e g_{n0},$$

$$b_{12} = n\omega_c f g_{n1} - \omega_c b g_{d1}, \qquad b_{22} = -g_{d0} + \zeta\omega_c g_{d1} - n\omega_c e g_{n1},$$

$$b_{13} = n\omega_c f g_{n2} - \omega_c b g_{d2}, \qquad b_{23} = -g_{d1} + \zeta\omega_c g_{d2} - n\omega_c e g_{n2}$$

$$b_{14} = -\omega_c b g_{d3}, \qquad b_{24} = -g_{d2} + \zeta\omega_c g_{d3},$$

$$b_{15} = -\omega_c b g_{d4}, \qquad b_{25} = -g_{d3} + \zeta\omega_c g_{d4},$$

$$b_{16} = -\omega_c b g_{d5}, \qquad b_{26} = -g_{d4} + \zeta\omega_c g_{d5},$$

$$\zeta = -(1+a)$$

In a similar manner as that described above, by substituting Equation 14 into Equation 12, a differential equation for $\Delta\theta_o$ may be obtained as in Equation 16.

【Equation 16】

$$\{s^3 + (\omega_c + \omega_c d)s^2 + m_p\omega_c hs + m_i\omega_c h\}\Delta\theta_o$$

$$= (-\omega_c cs^2 - m_p\omega_c gs - m_i\omega_c g)\Delta V_o$$

By using constants defined above, an $A_{gf}$ matrix defined in Equation 13 may be expressed as in Equation 17 below.

【Equation 17】

$$A_1 = \begin{bmatrix} [O]_{2\times1} & [I]_{2\times2} & [O]_{2\times3} \\ & [A_{11}] & \\ & [O]_{5\times6} & \\ & [A_{12}] & \end{bmatrix}, \quad A_2 = \begin{bmatrix} & [O]_{2\times6} \\ & [A_{21}] \\ [O]_{5\times1} & [I]_{5\times5} \\ & [A_{22}] \end{bmatrix}$$

Detailed definitions of parameters in Equation 17 are as follows.

$$A_{11} = \begin{bmatrix} a_{11} & 0 & 0 & 0 \\ 0 & a_{11} & 0 & 0 \\ 0 & 0 & a_{11} & 0 \\ 0 & 0 & 0 & a_{11} \end{bmatrix}, \quad A_{21} = \begin{bmatrix} a_{21} & 0 & 0 & 0 \\ 0 & a_{21} & 0 & 0 \\ 0 & 0 & a_{21} & 0 \\ 0 & 0 & 0 & a_{21} \end{bmatrix},$$

$$A_{12} = [b_{11} \ b_{12} \ b_{13} \ b_{14} \ b_{15} \ b_{16}]/g_{d5},$$

$$A_{22} = [b_{21} \ b_{22} \ b_{23} \ b_{24} \ b_{25} \ b_{26}]/g_{d5},$$

$$a_{11} = [-m_i\omega_c h \quad -m_p\omega_c h \quad -\omega_c - \omega_c d],$$

$$a_{21} = [-m_i\omega_c g \quad -m_p\omega_c g \quad -\omega_c c]$$

Here, a11 and a21 denote coefficients.

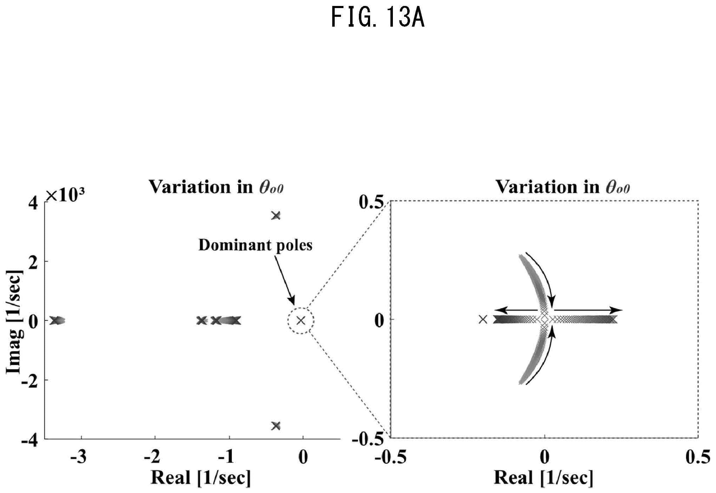

FIGS. 13A to 13C are graphs showing root loci according to modifications of specific parameters for a stability verification model of a shipboard microgrid operation method of the present embodiment.

FIG. 13A shows a root locus for an initial value of a phase difference between a grid-forming controller and a grid. According to FIG. 13A, it can be confirmed that, as an initial phase difference with a shipboard microgrid increases, a specific root has a positive real number, and thus a system becomes unstable.

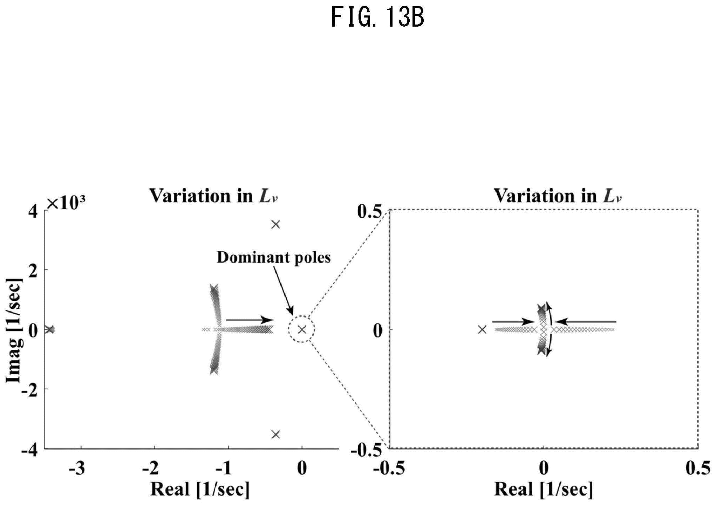

FIG. 13B shows a green root locus obtained by changing a virtual impedance value in a state in which a system is unstable due to an initial phase difference. As shown in FIG. 13B, it can be confirmed that when a virtual inductance component of virtual impedance is increased, a root with a positive number shifts to have a negative number, and thus the system becomes stable.

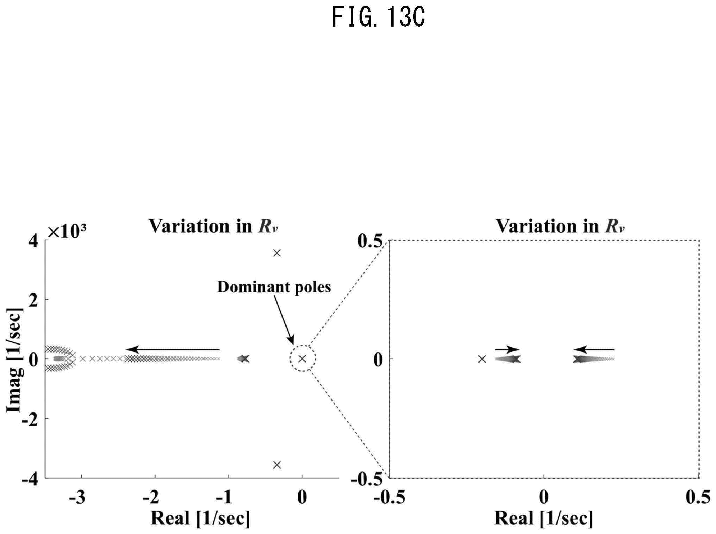

Meanwhile, as shown in FIG. 13C, it can be confirmed that when only a virtual resistance component of virtual impedance is increased, a system stabilization effect is not significant, and a negative real root is shifted away from an origin, thereby obtaining an effect of reducing damping characteristics of a system.

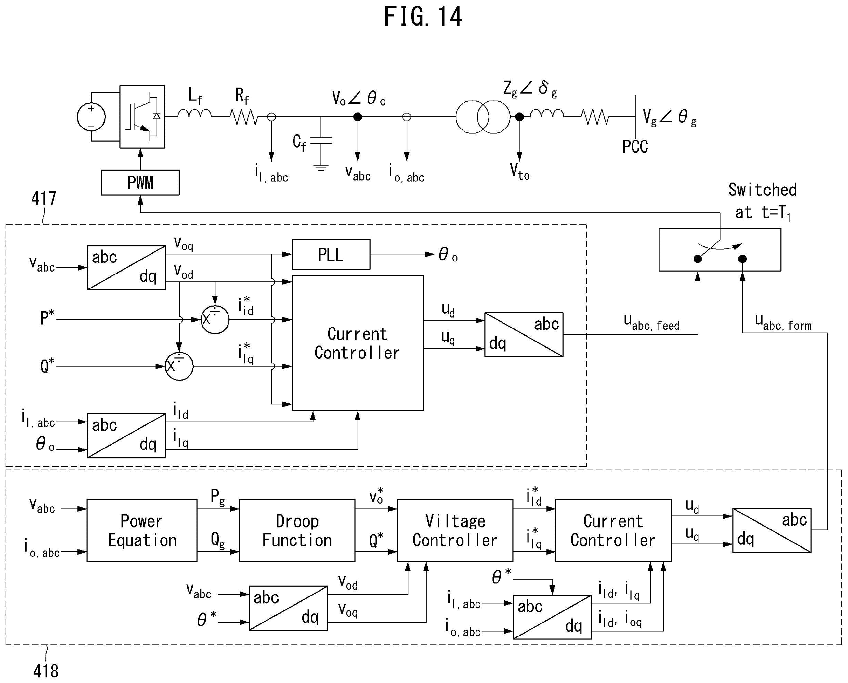

FIG. 14 is a diagram of a simulation control configuration that may be adopted in a shipboard microgrid operation method of the present embodiment.

FIG. 14 corresponds to at least a part of a structure of a ship power controller for simulation when a power converter of an SGIC switches a control mode from grid-feeding to grid-forming. The ship power controller may include a grid-feeding control unit 417 and a grid-forming control unit 418.

The grid-feeding control unit 417 may include a DQ conversion unit that outputs a q-axis output voltage $v_{oq}$ and a d-axis output voltage $v_{od}$ by converting a three-phase (abc) voltage $v_{abc}$ along a dq-axis, a phase locked loop PLL, a current controller, and a DQ inverse conversion unit. The grid-forming control unit 418 may include a power equation processing unit, a droop function processing unit, a voltage controller, a current controller, two DQ conversion units, and a DQ inverse conversion unit.

A first converter voltage command $u_{abc,feed}$ generated by the grid-feeding control unit 417 and a second converter voltage command $u_{abc,form}$ generated by the grid-forming control unit 418 may be selectively applied to a PWM control module of the ship power controller according to a switching operation of a circuit breaker of a switchboard at a first time (t=T1) to switch an operation mode of a power converter connected to an SG in a shipboard microgrid.

That is, when the power converter of the SG switches a control mode, the ship power controller may perform control such that a reference power value becomes zero in a grid-feeding state before the first time T1 and then may immediately switch a control mode to a grid-forming mode after the first time T1.

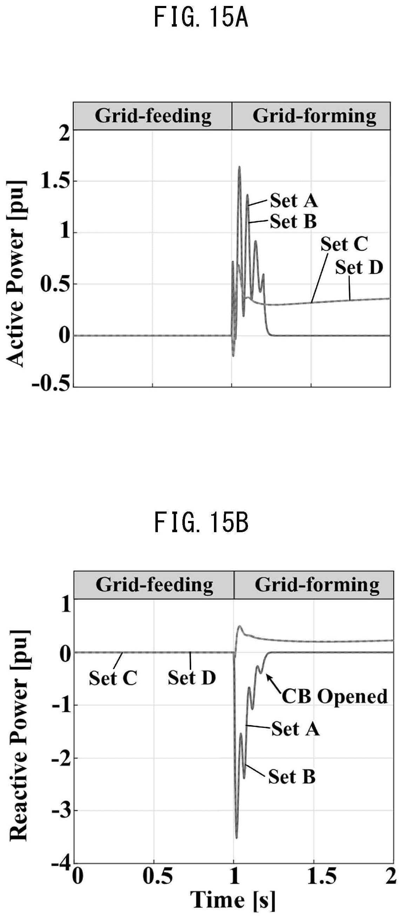

FIGS. 15A and 15B are graphs showing simulation results for active power and reactive power during control mode switching between grid-feeding and grid-forming according to the simulation control configuration of FIG. 14.

FIGS. 15A and 15B show simulation results of active power and reactive power during control mode switching according to whether virtual impedance is applied and whether components are combined. The simulation results are expressed numerically as shown in Table 2.

[Table 2]

| RMS variation | VI | Set A | Set B | Set C | Set D |
|---|---|---|---|---|---|
| | $R_v$[pu] | 0.0000 | 0.0030 | 0.0000 | 0.0030 |
| | $L_v$[pu] | 0.0000 | 0.0000 | 0.0035 | 0.0035 |
| $\Delta P_{o,RMS}$[pu] | 1) | 0.8004 | 0.7996 | 0.1829 | 0.1826 |
| $\Delta Q_{o,RMS}$[pu] | 2) | 1.5069 | 1.5084 | 0.1224 | 0.1219 |
| $\Delta\omega_o^{*}{}_{,RMS}$[pu] | 3) | 0.0482 | 0.0480 | 0.0212 | 0.0212 |
| $\Delta V_o^{*}{}_{,RMS}$[pu] | 4) | 0.0360 | 0.0360 | 0.0031 | 0.0030 |

As can be seen from results of Set A in FIGS. 15A and 15B, when there is no virtual impedance, it can be confirmed that active power, reactive power, voltage, and frequency all undergo severe fluctuations during control mode switching, resulting in disconnection from a grid.

Results of Set B which only has virtual resistance components also show results that are not significantly different from those of Set A, resulting in disconnection from a grid.

Meanwhile, in the case of Set C and Set D which have virtual inductance components, it can be seen that, without significant fluctuations in all indicators, a connection is made to a grid, thereby allowing grid-forming control to be started. Since grid-forming control is performed normally, power may be independently supplied to a load of a shipboard microgrid even when the operation of a synchronous generator is stopped.

In this way, it can be confirmed through simulations that virtual inductance is required for switching to a grid-forming control mode, and an efficient operation sequence of an SGIC as described with reference to FIG. 5 is possible. In addition, it can be confirmed that simulation results are similar to root locus results described above with reference to FIGS. 13A to 13C.

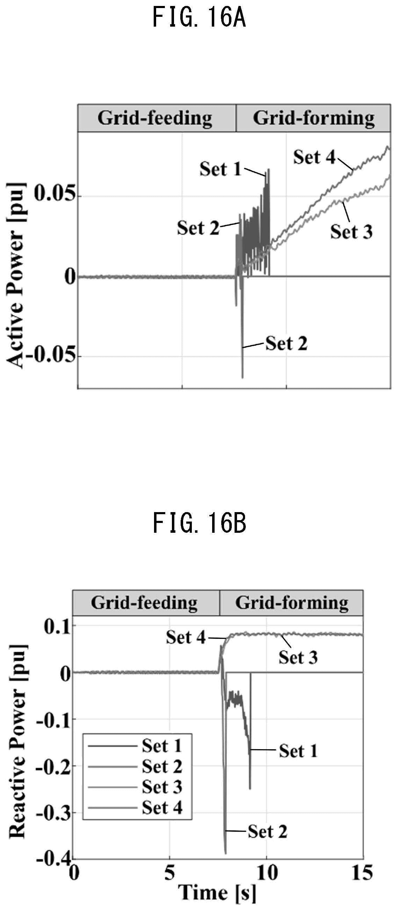

FIGS. 16A and 16B are graphs showing simulation results for active power and reactive power during control mode switching between grid-feeding and grid-forming by applying a shipboard microgrid operation method of the present embodiment to an actual ship.

As shown in FIGS. 16A and 16B, for verification of a ship power controller of the present embodiment on an actual ship, experiments of an effect of virtual impedance were performed when a control mode was switched to a grid-forming mode under the same conditions as the simulations described above with reference to FIGS. 15A and 15B. Experimental results obtained for four virtual impedance sets are shown in Table 3.

[Table 3]

| RMS variation | VI | Set 1 | Set 2 | Set 3 | Set 4 |
|---|---|---|---|---|---|
| | $R_v$[pu] | 0.0000 | 0.0011 | 0.0000 | 0.0011 |
| | $L_v$[pu] | 0.0000 | 0.0000 | 0.0759 | 0.0759 |
| $\Delta P_{o,RMS}$[pu] | 1) | 0.0276 | 0.0260 | 0.0153 | 0.0191 |
| $\Delta Q_{o,RMS}$[pu] | 2) | 0.0761 | 0.1881 | 0.0482 | 0.0441 |
| $\Delta\omega_o^{*}{}_{,RMS}$[pu] | 3) | 0.0172 | 0.0168 | 0.0005 | 0.0004 |
| $\Delta V_o^{*}{}_{,RMS}$[pu] | 4) | 0.0187 | 0.0475 | 0.0020 | 0.0023 |

When there is no virtual impedance as in Set A, it can be confirmed that active power, reactive power, voltage, and frequency all undergo severe fluctuations during control mode switching, which causes a shaft generator system to be disconnected from a shipboard microgrid.

In addition, it can be seen that, in Set B which has only virtual resistance components, a shaft generator system is also disconnected from a shipboard microgrid due to control instability.

Similar to the simulation results, in the case of Set C and Set D which have virtual inductance components, it can be confirmed that, without significant fluctuations in all indicators, a shaft generator system is connected to a shipboard microgrid to start grid-forming control.

It can be seen that these experimental results are similar to the root locus results and simulation results of the above-described embodiment.

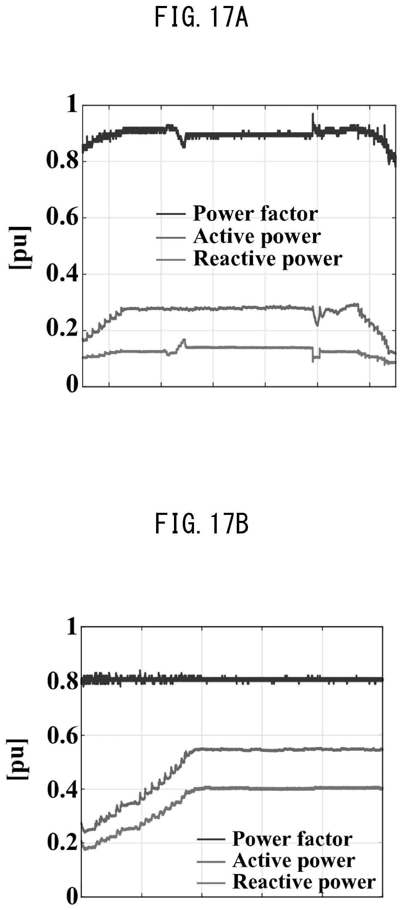

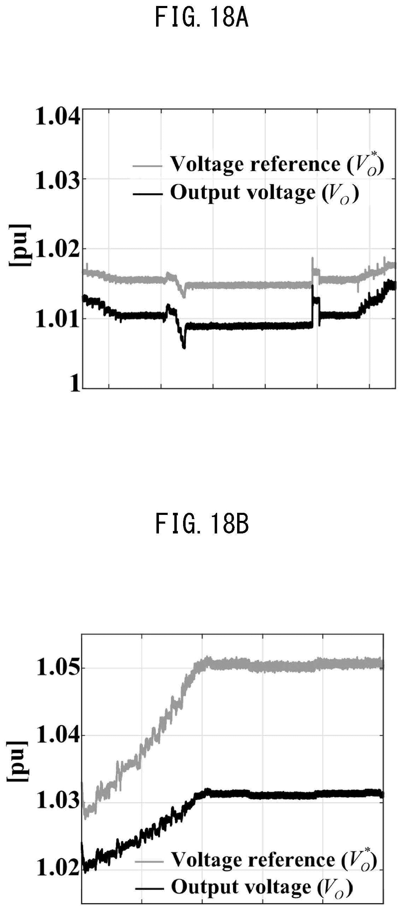

FIGS. 17A and 17B are graphs showing a power factor, active power, and reactive power during a parallel operation of a grid-forming power converter and a synchronous generator, before and after self-SVC is applied in a shipboard microgrid operation method of the present embodiment. FIGS. 18A and 18B are graphs showing a reference voltage and an output voltage when a grid-forming power converter operates in parallel with a synchronous generator, before and after self-SVC is applied in a shipboard microgrid operation method of the present embodiment.

FIGS. 17A, 17B, 18A, and 18B show experimental verification results of the self-SVC. That is, waveforms of active power, reactive power, a power factor, and output voltage during a parallel operation of the synchronous generator and the grid-forming power converter are shown to be distinguished by different shades of gray.

When self-SVC is not applied, as a load increases due to impedance of a power converter and a voltage drop of an isolation transformer side, a droop characteristic curve (load-voltage) of a final voltage magnitude output voltage becomes lower than a droop curve (load-voltage) of the synchronous generator, thereby resulting in a phenomenon in which reactive power cannot be smoothly supplied to a shipboard microgrid as shown in FIGS. 17A and 18B.

Since a power factor of the power converter increased to 0.9 in a state in which a power factor of a load of a ship was 0.8, as shown in these drawings, a power factor of the other synchronous generators decreased to 0.7, resulting in an imbalance in reactive power sharing. Since an imbalance of line reactive power exceeding 10% is not permitted according to the classification society standards that define the safety criteria of ships, an operation state does not meet the safety criteria.

As described above with reference to FIG. 12, experimental results obtained by applying a self-SVC structure of the present embodiment are shown in FIGS. 17B and 18B. According to these drawings, it can be confirmed that, in a state in which a power factor of a load of a ship is fixed at 0.8, reactive power is smoothly fed at a power factor of 0.8, similarly to the other synchronous generators.

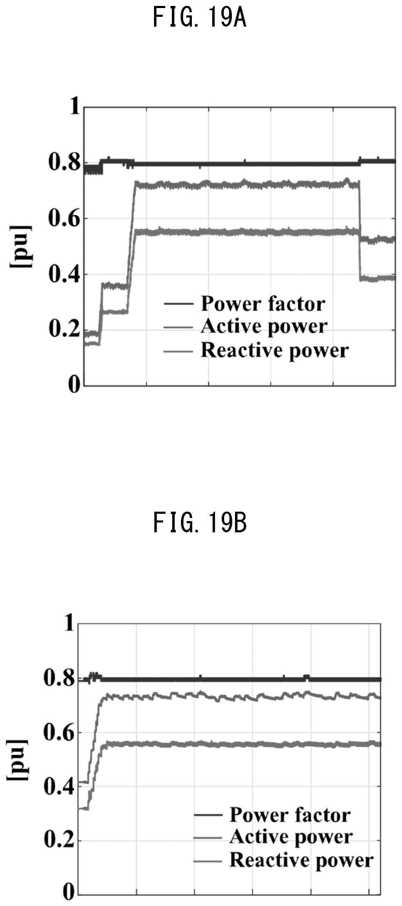

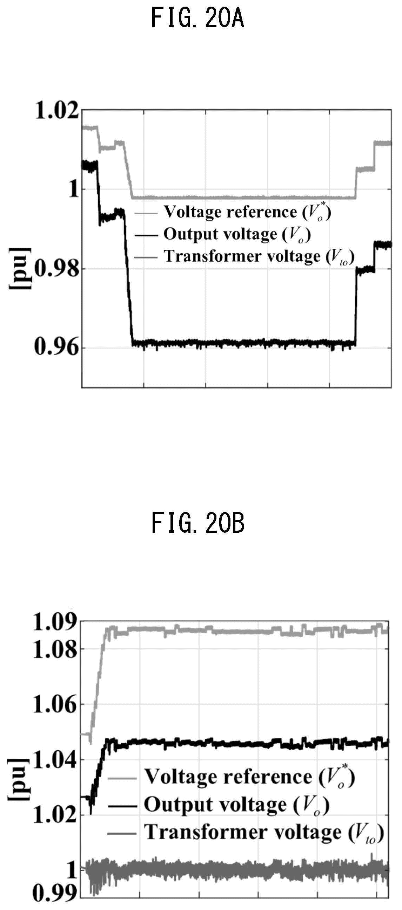

FIGS. 19A and 19B are graphs showing a power factor, active power, and reactive power during a standalone operation of a grid-forming power converter in a shipboard microgrid operation method of the present embodiment. FIGS. 20A and 20B are graphs showing a reference voltage and an output voltage during a standalone operation of a grid-forming power converter in a shipboard microgrid operation method of the present embodiment.

FIGS. 19A, 19B, 20A, and 20B show experimental verification results during a standalone operation of the grid-forming power converter, and waveforms of active power, reactive power, a power factor, and output voltage according to whether self-SVC is applied are shown to be distinguished by different shades of gray.

When SVC is not applied during a standalone operation of the grid-forming power converter in a shipboard microgrid, due to impedance of a power converter and a voltage drop of an isolation transformer side, a final voltage magnitude is accompanied by a voltage drop due to an output current in addition to a droop of the output voltage, and thus it can be confirmed that a voltage drop occurs up to 4% of a rated voltage according to a load size as shown in FIGS. 19A and 20A.

Meanwhile, waveforms of experiment results during a standalone operation of the power converter to which self-SVC is applied can be confirmed in FIGS. 19A and 20B. When SVC is performed to maintain a voltage of a secondary side of an isolation transformer at 1 pu based on a rated voltage, impedance of a control closed loop of a power converter and a voltage drop of the isolation transformer may be compensated for, and thus it can be confirmed that a voltage of the secondary side of the isolation transformer is maintained at 1 pu.

As in the embodiments described above, the present invention may provide an efficient grid connection control method of a grid-forming SG applied to a ship, and a self-SVC method for improving the power quality of an onboard power grid. In addition, when the droop characteristics of a synchronous generator are emulated, self-SVC may be performed to compensate for a voltage drop occurring in a grid-forming power converter and connection equipment such as an isolation transformer. In this case, the self-SVC may be applied in accordance with a voltage reference of each of a parallel operation and a standalone operation. In addition, in order to secure stability during control mode switching between grid-feeding and grid-forming of a power converter, a grid-forming control mode based on virtual impedance may be applied, and an efficient grid input sequence of an SG based on a squirrel-cage induction device using the same may be provided. The effects of the present invention were verified by evaluating stability using a root locus based on an equation model, performing MATLAB/SIMULINK simulations, and performing verification experiments in a ship to which an actual SG was applied.

The above-described methods according to the present invention may be implemented with program instructions which may be executed by various computers and may be recorded in computer-readable media.. The computer-readable media may include, alone or in combination with the program instructions, data files, data structures, and the like. The program instructions recorded in the computer-readable media may be designed and configured especially for the present invention or may be known and available to those skilled in computer software.

Examples of the computer-readable media includes hardware devices specifically configured to store and execute program commands, such as a ROM, a RAM, a flash memory, and the like. Examples of the program commands include a machine code such as that produced by a compiler as well as a higher level code that may be executed by a computer using an interpreter or the like. The above-described hardware devices may be provided to operate as one or more software modules in order to perform the operations of the present invention, or vice versa.

While the present invention has been described with reference to embodiments, it will be understood by those skilled in the art that various changes and modifications may be made without departing from the spirit and scope of the present disclosure as defined by the appended claims.

**Claims**

1.  A ship power management method comprising:

    electrically connecting a shaft generator to a shipboard microgrid;
    controlling a generator-side converter of a power converter connected to the shaft generator based on a zero power reference;
    charging a DC-link capacitor of the power converter;
    magnetizing the shaft generator using a current of the DC-link capacitor;
    causing the shaft generator to perform self-generation;
    controlling a grid-side converter of the power converter based on a zero power reference;
    controlling the generator-side converter of the power converter to charge the DC-link capacitor with power of the shaft generator; and
    performing self-secondary voltage control through the power converter such that the shaft generator operates as a distributed generator of the shipboard microgrid.

2.  The ship power management method of claim 1, wherein the charging of the DC-link capacitor of the power converter connected to the shaft generator includes controlling the grid-side converter to charge the DC-link capacitor to reach at least a portion of a rated voltage thereof, and a charged DC voltage is maintained by control of the power converter.

3.  The ship power management method of claim 1, further comprising, before the magnetizing of the shaft generator, controlling the grid-side converter in a grid-feeding mode.

4.  The ship power management method of claim 3, further comprising, when the DC-link capacitor is charged to a rated voltage or a preset voltage with the power of the shaft generator, switching the grid-side converter from the grid-feeding mode to a grid-forming mode.

5.  The ship power management method of claim 4, wherein the performing of the self-secondary voltage control includes performing voltage control of the grid-side converter according to a control droop coefficient determined based on or selected from measurement values that are preset or collected in real time.

6.  The ship power management method of claim 5, wherein the performing of the self-secondary voltage control further includes subtracting each of a feedback output voltage reference and preset fixed virtual impedance from an output voltage reference and transmitting a subtracted result to a voltage controller.

7.  The ship power management method of claim 5, further comprising performing at least one of torque control and flux control on the shaft generator to maintain a voltage of the DC-link capacitor.

8.  The ship power management method of claim 5, further comprising performing at least one of torque control and flux control on the shaft generator to connect the power converter to a point of common coupling of the shipboard microgrid.

9. The ship power management method of claim 8, further comprising adaptively estimating stator resistance for the shaft generator using a semi-positive definitive Lyapunov function defined to include a stator resistance error for the torque control or the flux control on the shaft generator.

10. The ship power management method of claim 9, wherein the estimating further includes performing integral control using a low-pass filter to achieve fast convergence of an equation solution when an equation is solved using a derivative of the semi-positive definitive Lyapunov function.

11. A ship power management apparatus for a shipboard microgrid based on a grid-forming shaft generator, the ship power management apparatus comprising:

at least one command including a shaft generator grid connection sequence; and
a processor which is connected to a memory configured to store the at least one command and executes the at least one command,
wherein the processor, by the at least one command, performs:

electrically connecting a shaft generator to a shipboard microgrid;
controlling a generator-side converter of a power converter connected to the shaft generator based on a zero power reference;
charging a DC-link capacitor of the power converter;
magnetizing the shaft generator using a current of the DC-link capacitor;
causing the shaft generator to perform self-generation;
controlling a grid-side converter of the power converter based on a zero power reference;
controlling the generator-side converter of the power converter to charge the DC-link capacitor with power of the shaft generator; and
performing self-secondary voltage control through the power converter such that the shaft generator operates as a distributed generator of the shipboard microgrid.

12. The ship power management apparatus of claim 11, wherein, in the charging of the DC-link capacitor of the power converter connected to the shaft generator, the processor controls the grid-side converter to charge the DC-link capacitor to reach at least a portion of a rated voltage thereof and maintains a charged DC-link voltage through control of the power converter.

13. The ship power management apparatus of claim 11, wherein the processor further performs, before the magnetizing of the shaft generator, controlling the grid-side converter in a grid-feeding mode.

14. The ship power management apparatus of claim 13, wherein the processor further performs, when the DC-link capacitor is charged to a rated voltage or a preset voltage with the power of the shaft generator, switching the grid-side converter from the grid-feeding mode to a grid-forming mode.

15. The ship power management apparatus of claim 14, wherein, in the performing of the self-secondary voltage control, the processor performs voltage control of the grid-side converter according to a control droop coefficient determined based on or selected from measurement values that are preset or collected in real time.

16. The ship power management apparatus of claim 15, wherein, in the performing of the self-secondary voltage control, the processor further performs subtracting each of a feedback output voltage reference and preset fixed virtual impedance from an output voltage reference and transmitting a subtracted result to a voltage controller.

17. The ship power management apparatus of claim 15, wherein the processor further performs at least one of torque control and flux control on the shaft generator to maintain a voltage of the DC-link capacitor.

18. The ship power management apparatus of claim 15, wherein the processor further performs adaptively estimating stator resistance for the shaft generator using a semi-positive definitive Lyapunov function defined to include a stator resistance error for torque control or flux control on the shaft generator.

19. A ship comprising a hull on which the ship power management apparatus of any one of claims 11 to 18 is mounted.

20. A ship using the ship power management method of any one of claims 1 to 10.

EP 4 772 433 A1

# FIG. 1

# FIG. 2

# FIG. 3

# FIG. 4

410

| VIRTUAL IMPEDANCE CONTROL UNIT | 412 |
| SHAFT GENERATOR GRID INPUT UNIT | 414 |
| SELF-SECONDARY VOLTAGE CONTROLLER | 416 |
| MODE SWITCHING UNIT | 418 |

420

MEMORY

| ROM | RAM |

410

PROCESSOR

INPUT INTERFACE DEVICE — 440

OUTPUT INTERFACE DEVICE — 450

470

STORAGE DEVICE — 460

TRANSCEIVER — 430

## FIG. 5

# FIG. 6

```
┌─────────────────────────────────────────┐
│   CONNECT SHAFT GENERATOR TO GRID        │──S610
│   AND MAGNETIZE SHAFT GENERATOR          │
└─────────────────────────────────────────┘
                    │
                    ▼
┌─────────────────────────────────────────┐
│ BEFORE GRID-FEEDING, GENERATE SELF-POWER │──S630
└─────────────────────────────────────────┘
                    │
                    ▼
┌─────────────────────────────────────────┐
│   PERFORM SELF-SECONDARY VOLTAGE CONTROL │──S650
│   FOR DISTRIBUTED POWER GENERATION       │
└─────────────────────────────────────────┘
```

# FIG. 7

## FIG. 8

## FIG. 9

# FIG. 10

EP 4 772 433 A1

# FIG. 11

# FIG. 12

FIG. 13A

Variation in $\theta_{o0}$

Variation in $\theta_{o0}$

Dominant poles

Imag [1/sec]

Real [1/sec]

Real [1/sec]

FIG. 13B

EP 4 772 433 A1

Variation in $L_v$

Dominant poles

Variation in $L_v$

EP 4 772 433 A1

# FIG. 13C

# FIG. 14

EP 4 772 433 A1

FIG. 15A

FIG. 15B

## FIG. 16A

## FIG. 16B

# FIG. 17A

# FIG. 17B

## FIG. 18A

## FIG. 18B

FIG. 19A

FIG. 19B

FIG. 20A

FIG. 20B

## INTERNATIONAL SEARCH REPORT

| International application No. |
|---|
| **PCT/KR2024/010101** |

| A. | CLASSIFICATION OF SUBJECT MATTER |
|---|---|
| | **B63J 3/02**(2006.01)i; **H02J 3/12**(2006.01)i; **H02J 3/38**(2006.01)i; **H02J 3/24**(2006.01)i; **B63J 3/00**(2006.01)i |

According to International Patent Classification (IPC) or to both national classification and IPC

| B. | FIELDS SEARCHED |
|---|---|

Minimum documentation searched (classification system followed by classification symbols)

B63J 3/02(2006.01); B60W 30/182(2012.01); B63H 21/17(2006.01); B63H 21/20(2006.01); G05D 1/00(2006.01); H02J 3/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그리드포밍(grid-forming), 인버터(inverter), 자화(magnetization) , 제로 전력 레퍼런스(zero power reference), 캐패시터(capacitor)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2431767 B1 (AGENCY FOR DEFENSE DEVELOPMENT) 11 August 2022 (2022-08-11) See paragraphs [0054]-[0059] and [0083]-[0088] and figures 4 and 10. | 1-20 |
| A | KR 10-2106022 B1 (KOREA MARITIME UNIVERSITY INDUSTRY-ACADEMIC COOPERATION FOUNDATION) 29 April 2020 (2020-04-29) See paragraphs [0019]-[0063] and figures 1-3. | 1-20 |
| A | KR 10-2022-0099602 A (HANWHA DEFENSE CO., LTD.) 14 July 2022 (2022-07-14) See paragraphs [0033]-[0044] and figures 1-2. | 1-20 |
| A | JP 2017-136894 A (KAWASAKI HEAVY IND. LTD.) 10 August 2017 (2017-08-10) See claim 1. | 1-20 |
| A | US 2009-0156068 A1 (BARRETT et al.) 18 June 2009 (2009-06-18) See paragraphs [0050]-[0053] and figures 3A-3B. | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 October 2024** | **23 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010101**

| Patent document cited in search report | | | Publication date (day/month/year) | Patent family member(s) | | | Publication date (day/month/year) |
|---|---|---|---|---|---|---|---|
| KR | 10-2431767 | B1 | 11 August 2022 | None | | | |
| KR | 10-2106022 | B1 | 29 April 2020 | None | | | |
| KR | 10-2022-0099602 | A | 14 July 2022 | None | | | |
| JP | 2017-136894 | A | 10 August 2017 | CA | 3013178 | A1 | 10 August 2017 |
| | | | | CA | 3013178 | C | 14 April 2020 |
| | | | | CN | 108602550 | A | 28 September 2018 |
| | | | | CN | 108602550 | B | 01 June 2021 |
| | | | | EP | 3412558 | A1 | 12 December 2018 |
| | | | | EP | 3412558 | A4 | 01 May 2019 |
| | | | | EP | 3412558 | B1 | 19 January 2022 |
| | | | | JP | 6757570 | B2 | 23 September 2020 |
| | | | | SG | 11201806534 | PA | 30 August 2018 |
| | | | | US | 10822067 | B2 | 03 November 2020 |
| | | | | US | 2019-0039707 | A1 | 07 February 2019 |
| | | | | WO | 2017-135199 | A1 | 10 August 2017 |
| US | 2009-0156068 | A1 | 18 June 2009 | AU | 2008-334928 | A1 | 18 June 2009 |
| | | | | AU | 2008-334928 | B2 | 22 November 2012 |
| | | | | CA | 2709279 | A1 | 18 June 2009 |
| | | | | CA | 2709279 | C | 15 April 2014 |
| | | | | CN | 101932469 | A | 29 December 2010 |
| | | | | EP | 2225118 | A1 | 08 September 2010 |
| | | | | EP | 2225118 | B1 | 22 June 2016 |
| | | | | ES | 2593471 | T3 | 09 December 2016 |
| | | | | JP | 2011-506180 | A | 03 March 2011 |
| | | | | KR | 10-2010-0116583 | A | 01 November 2010 |
| | | | | PL | 2225118 | T3 | 31 May 2017 |
| | | | | US | 8062081 | B2 | 22 November 2011 |
| | | | | WO | 2009-076659 | A1 | 18 June 2009 |

Form PCT/ISA/210 (patent family annex) (July 2022)